# EUROPEAN PATENT APPLICATION

(11) **EP 0 867 338 A2**
(43) Date of publication of application: **30.09.1998**
(21) Application number: 98660022.9
(22) Date of filing: 20.03.1998
(51) Int. Cl.: B60Q 7/00

(54) **Warning triangle**

(30) Priority: 27.03.1997 FI 971323
(71) Applicant: OY TALMU AB, 24100 Salo (FI)
(72) Inventor: Ahlfors, Leif, 25650 Strömma (FI); Virta, Heimo, 24280 Salo (FI)
(74) Representative: Roitto, Klaus

(57) **Abstract**

The present invention relates to a warning triangle comprising a first side (2), a second side (3), a base portion (4) and legs (6, 7, 8, 9), the base portion, the first side and the second side each comprising a night reflection part (12, 13 and 14), a day reflection part (15, 16 and 17) being arranged within the nigh reflection parts, closer to the middle of the warning triangle (1). A gap (18) is arranged between the nigh reflection part (12) of the first side and the day reflection part (15) of the first side, the day reflection part (17) of the base portion being arranged to at least partly extend through the gap when the warning triangle (1) is in its folded transport position. Such an arrangement provides a small-sized warning triangle.

## Description

### BACKGROUND OF THE INVENTION

The present invention relates to a warning triangle comprising a first side, a second side, a base portion and legs, the base portion, the first side and the second side each comprising a night reflection part, a day reflection part being arranged within the nigh reflection parts, closer to the middle of the warning triangle.

Such warning triangles are well known and usually included in the equipment of vehicles, in many countries even as mandatory equipment. It is the purpose of a warning triangle to warn other road users of a peril on the road, such as a vehicle in a hazardous place. For this purpose the warning triangle is placed in an upright position on the road. Strict rules pertain to the properties of warning triangles; e.g. the size and reflection characteristics of the reflective surfaces have to fulfil certain requirements set by the authorities.

In order for the warning triangle to take up little space in a vehicle, it is usually foldable into a transport position. The equipment of a warning triangle usually also includes a protective casing, i.e. a case where the triangle is stored in said folded transport position. As far as the user, i.e. the motorist, is concerned, a warning triangle should take up as little space as possible in the transport position. In other words, it should fit into as small a protective casing as possible. The same requirement is also set by car designers and manufactures.

A conventional warning triangle is quite big and complex in shape when in the folded transport position and accordingly requires a big, i.e. bulky protective casing. This leads to problems, since consequently e.g. a car designer has to reserve quite a large storage or transport space for the warning triangle. This may be a problem particularly in small cars.

Erecting known warning triangles into operative position and returning them to transport position is often cumbersome. To prevent hazardous situations, the erection of a warning triangle, in particular, should be easy.

### BRIEF DESCRIPTION OF THE INVENTION

It is thus the object of the invention to provide a warning triangle which solves the above problems.

The object of the invention is achieved with a warning triangle characterized by a gap being arranged between the nigh reflection part of the first side and the day reflection part of the first side, and the day reflection part of the base portion being arranged to at least partly extend through the gap when the warning triangle is in its folded transport position.

The invention may be implemented analogously by arranging a gap between the night reflection part of the base portion and the day reflection part of the base portion, and by arranging at least the day reflection part of the first side such that it at least partly extends through the gap when the warning triangle is in its folded transport position.

The preferred embodiments of the warning triangle of the invention are disclosed in the attached dependent claims 2 to 10.

The invention is based on the insight to provide a side of the warning triangle with a gap through which the day reflection part(s) of the other side(s) is/are led in order to pack the planar components of the warning triangle closely.

It is an advantage of the warning triangle of the invention that it is small-sized in its folded transport position and hence fits into a small protective casing. The small size is achieved by the different parts of the warning triangle overlapping in a suitable manner when the warning triangle is in its folded transport position. A further advantage achieved with the warning triangle of the invention is that its different surfaces are arranged to guide each other when the warning triangle is folded into transport position and opened into operative position, making the warning triangle of the invention easy to use. Still a further advantage achieved with the warning triangle of the invention is that when the warning triangle is in its folded transport position, its outer surfaces form two substantially parallel surfaces, making the warning triangle easy to fit into the protective casing. This is also affected by the front legs of the warning triangle of the invention being between either one of the sides and the night reflection part of the base portion in the folded transport position of the warning triangle and hence the front legs cannot move upwards.

### BRIEF DESCRIPTION OF THE DRAWINGS

In the following the invention will be described in greater detail by means of preferred embodiments with reference to the attached drawings, of which
Figure 1 is a front view of the warning triangle of the invention,
Figure 2 is a front view of the warning triangle of the invention in its folded transport position, and
Figure 3 is an enlarged section of the warning triangle of the invention in its folded transport position.

### DETAILED DESCRIPTION OF THE INVENTION

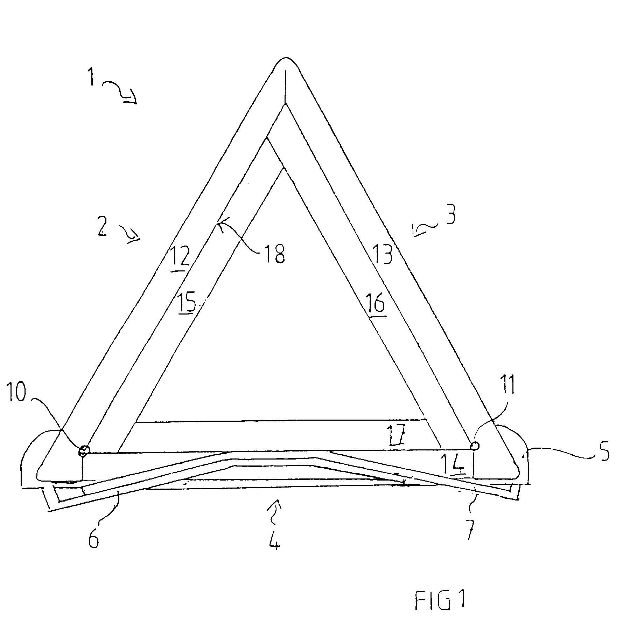

The warning triangle 1 of Figure 1 comprises a first side 2, a second side 3, a base portion 4, and a frame 5 to which legs 6, 7, 8, 9 are fastened. The first side 2 and the second side 3 are pivotally fastened to the base portion 4 at pivot points 10 and 11. The legs 6 to 9 may also be fastened to the base portion 4, whereby no separate frame 5 is needed. The legs 6 to 9 may naturally be otherwise shaped than shown in the figure, i.e. threadlike, and the number of legs can be different from the number of legs 6 to 9, i.e. four, in the warning triangle 1 according to the figure. The first side 2, the second side 3, and the base portion 4 each comprise a night reflection part 12, 13, 14. A day reflection part 15, 16, 17 is placed within the night reflection parts, closer to the middle of the warning triangle 1. The front surface of the night reflection parts 12 to 14 and the day reflection parts 15 to 17 is a reflective surface.

In the warning triangle 1 of the invention a gap 18 is arranged between the night reflection part 12 of the first side 2 and the day reflection part 15 of the first side 2. In the warning triangle 1 according to the figure, the gap 18 is provided by the front surface of the day reflection part 15 of the first side 2 being located slightly behind the night reflection part 12 of the first side 2, the gap 18 being formed between them. When the warning triangle 1 is in its folded transport position, the day reflection part 17 of the base portion 4 is arranged to at least partly extend through said gap 18. The gap 18 is to be dimensioned such that said day reflection part 17 of the base portion 4 can penetrate it, but yet so small that the warning triangle 1 becomes small-sized, i.e. in this case, thin. The gap 18 should be preferably dimensioned such that it is substantially as long as the day reflection part 17 of the base portion 4. The width X of the gap should be selected such that it is substantially as wide as the thickness of the day reflection part 17 of the base portion 4, i.e. such that the distance between the front surface, i.e. the reflective surface, of the day reflection part 15 of the first side 2 and the rear surface of the night reflection part 12 of the first side 2 is substantially the same as the thickness of the day reflection part 17 of the base portion 4. Such dimensioning provides a thin warning triangle 1 which is small in its folded transport position. Furthermore, the day reflection part 15 of the first side 2 and the day reflection part 17 of the base portion 4 are preferably arranged with respect to each other such that when the warning triangle 1 is being folded into its transport position, the day reflection part 15 of the first side 2 guides the day reflection part 17 of the base portion 4 into the gap 18.

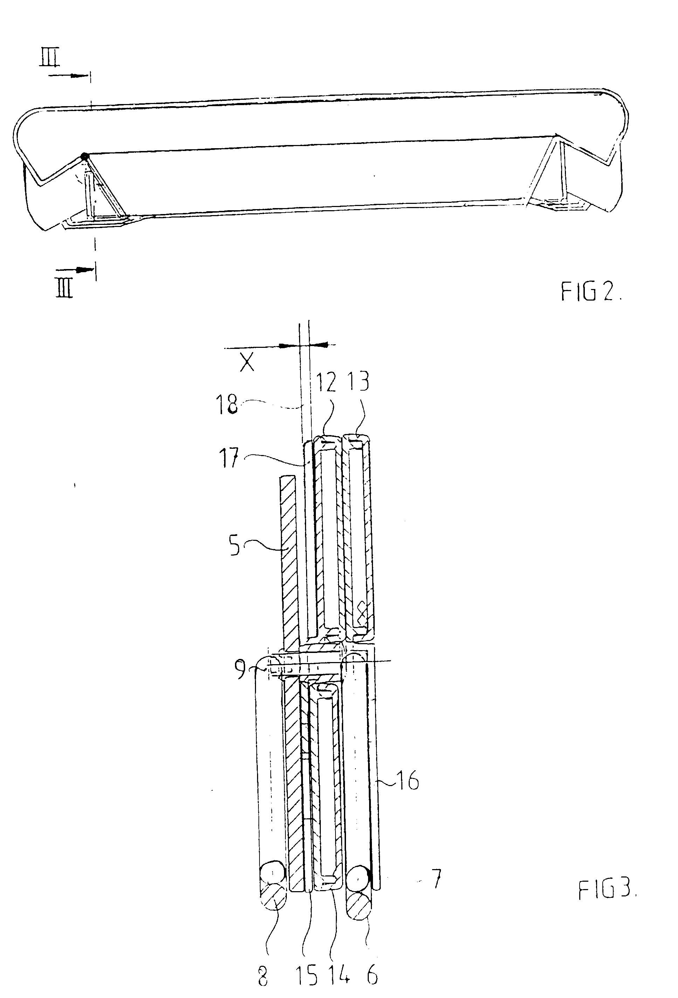

In Figures 2 and 3 the warning triangle 1 has four legs 6 to 9, two at the front of the warning triangle 1 and two at the back of the warning triangle 1, and it is made smaller in its transport position and above all easier to handle by having the day reflection part 16 of the second side 3 substantially cover at least the front legs 6 and 7 of the warning triangle 1 when the warning triangle 1 is in its folded transport position. In the warning triangle 1 of Figure 2, the front legs 6 and 7 are at least partly between the second side 3 and the base portion 4. This can be preferably achieved by placing the day reflection part 16 of the second side 3 with respect to the night reflection part 14 of the base portion 4 such that when the warning triangle 1 is in its folded transport position, the distance between the rear surface of the day reflection part 16 of the second side 3 and the reflection, i.e. front surface of the night reflection part 14 of the base portion 4 is substantially equal to the thickness of the legs 6, 7 of the warning triangle 1. Such an arrangement provides a thin warning triangle 1.

In Figures 2 and 3 the warning triangle 1, which further comprises a separate disciform frame 5, preferably made of metal in order for its weight to better keep the warning triangle in place in the upright position, has been further made smaller in the transport position by placing the frame 5 with respect to the base portion 4 such that a gap 19 is formed between the frame 5 and the base portion 4. The gap 19 is to be dimensioned such that the day reflection part 15 of the first side 2 fits between the frame 5 and the base portion 4 in the folded transport position of the warning triangle 1. This gap 19 can be preferably dimensioned eg. such that the gap 19, i.e. the distance between the frame 5 and the rear surface of the base portion 4 is substantially as wide as the thickness of the day reflection part 15 of the first side 2, whereby the gap 19 does not become too large and the warning triangle 1 too thick. In addition, the day reflection part 17 of the base portion 4 and the day reflection part 15 of the first side 2 are preferably arranged with respect to each other such that the day reflection part 17 of the base portion 4 is arranged to guide the day reflection part 15 of the first side 2 into the gap 19 between the frame 5 and the base portion 4 when the warning triangle 1 is folded into its transport position.

The warning triangle 1 becomes further easier to handle by the night and day reflection parts 12, 15 of the first side 2, the night and day reflection parts 13, 16 of the second side 3, and the night and day reflection parts 14, 17 of the base portion 4, and a possible frame 5 being placed with respect to each other such that they are located on parallel planes. This provides two substantially parallel surfaces pointing away from the warning triangle 1 when the warning triangle 1 is in its folded transport position. This makes the warning triangle 1 easier to be placed in the protective casing (not shown in the figure). Furthermore, the back legs 8 and 9 of the warning triangle 1 of Figure 2 are designed such that they are arranged to be substantially evenly against the frame 5, behind the warning triangle 1, in the folded transport position of the warning triangle 1.

The warning triangle 1 of the invention has been described by means of only one preferred embodiment. It is obvious to those skilled in the art that, unlike shown in the figure, the parts described in the claims and the specification, the first side 2 and the second side 3, can be placed the other way around.

The invention can be analogously implemented by arranging a gap between the night reflection part 14 of the base portion and the day reflection part 17 of the base portion, at least the day reflection part 15 of the first side being arranged to at least partly extend through the gap when the warning triangle 1 is in its folded transport position. Additionally, in this alternative embodiment, the day reflection part 16 of the second side can also be placed such that it at least partly extends through the gap when the warning triangle 1 is in its folded transport position. This alternative embodiment also allows the parts of the warning triangle, the first side, the second side, the base portion and their night and day reflection parts to be positioned with respect to each other such that they preferably guide each other when the warning triangle 1 is being folded into its transport position. This embodiment also allows the parts to be positioned such that the warning triangle becomes small-sized.

It is also obvious to those skilled in the art that with progressing technology, the basic idea of the invention can be implemented in a variety of ways. Accordingly, the invention and its embodiments are not restricted to the above described examples, but may vary within the scope of the claims.

## Claims

1. A warning triangle comprising a first side (2), a second side (3), a base portion (4) and legs (6, 7, 8, 9), the base portion, the first side and the second side each comprising a night reflection part (12, 13 and 14), a day reflection part (15, 16 and 17) being arranged within the nigh reflection parts, closer to the middle of the warning triangle (1), **characterized** by a gap (18) being arranged between the nigh reflection part (12) of the first side and the day reflection part (15) of the first side, and the day reflection part (17) of the base portion being arranged to at least partly extend through the gap (18) when the warning triangle (1) is in its folded transport position.

2. A warning triangle as claimed in claim 1, **characterized** in that the gap (18) is substantially as long as the day reflection part (17) of the base portion.

3. A warning triangle as claimed in claim 1, **characterized** in that the width X of the gap (18) is substantially equal to the thickness of the day reflection part (17) of the base portion.

4. A warning triangle as claimed in claim 1, **characterized** in that the day reflection part (15) of the first side is arranged to guide the day reflection part (17) of the base portion to the gap (18) when the warning triangle (1) is being folded into its transport position.

5. A warning triangle as claimed in claim 1, **characterized** in that the second side (3) is arranged to substantially cover at least the front legs (6 and 7) of the warning triangle (1) when the warning triangle (1) is in its folded transport position.

6. A warning triangle as claimed in claim 5, **characterized** in that the distance between the rear surface of the day reflection part (16) of the second side and the reflection surface of the night reflection part (14) of the base portion is substantially equal to the thickness of the legs (6 and 7) of the warning triangle when the warning triangle (1) is in its folded transport position.

7. A warning triangle as claimed in any one of claims 1 to 6, further comprising a disciform frame (5), **characterized** in that the frame (5) is located at a distance from the rear surface of the base portion (4) such that a gap (19) is formed between the frame and the base portion, the day reflection part (15) of the first side being located in said gap (19) when the warning triangle (1) is in its folded transport position.

8. A warning triangle as claimed in claim 7, **characterized** in that the gap (19) is substantially as wide as the thickness of the day reflection part (15) of the first side.

9. A warning triangle as claimed in claim 8, **characterized** in that the day reflection part (17) of the base portion is arranged to guide the day reflection part (15) of the first side to the gap (19) when the warning triangle (1) is being folded into its transport position.

10. A warning triangle as claimed in any one of claims 1 to 9, **characterized** by the night and day reflection parts of the first side (2), the night and day reflection parts of the second side (3), and the night and day reflection parts of the base portion (4) and a possible frame (5) being placed on parallel planes.

11. A warning triangle comprising a first side (2), a second side (3), a base portion (4) and legs (6, 7, 8, 9), the base portion, the first side and the second side each comprising a night reflection part (12, 13 and 14), a day reflection part (15, 16 and 17) being arranged within the nigh reflection parts, closer to the middle of the warning triangle (1), **characterized** by a gap between the night reflection part (14) of the base portion and the day reflection part (17) of the base portion, and by at least the day reflection part (15) of the first side being arranged to at least partly extend through the gap when the warning triangle (1) is in its folded transport position.
